# EUROPEAN PATENT SPECIFICATION

(11) **EP 3 869 598 B1**
(45) Date of publication and mention of the grant of the patent: **16.04.2025**
(21) Application number: 19873655.5
(22) Date of filing: 16.10.2019
(51) Int. Cl.: H01M 4/73, H01M 4/14

(54) **LEAD-ACID BATTERY CURRENT COLLECTOR**
BLEI-SÄURE-BATTERIESTROMABNEHMER
COLLECTEUR DE COURANT DE BATTERIE D'ACCUMULATEURS AU PLOMB

(30) Priority: 16.10.2018 JP 2018194798
(43) Date of publication of application: 25.08.2021
(73) Proprietor: GS Yuasa International Ltd., Kisshoin, Minami-ku, Kyoto-shi, Kyoto 601-8520 (JP)
(72) Inventor: HAZE, Akinori, Kyoto-shi, Kyoto 601-8520 (JP); HIGASHIMURA, Yuki, Kyoto-shi, Kyoto 601-8520 (JP)
(74) Representative: Isarpatent
(86) International application number: PCT/JP2019/040720
(87) International publication number: WO 2020/080424

(56) References cited:
- EP-A1- 3 196 965
- WO-A1-2012/053025
- WO-A1-2015/056417
- WO-A1-2016/194328
- JP-A- 2004 186 013
- JP-A- 2005 056 622
- JP-A- 2010 182 568
- JP-A- 2017 139 215
- JP-A- H06 267 544
- KR-A- 20170 092 111

## Description

### TECHNICAL FIELD

The present invention relates to a current collector for a lead-acid battery.

### BACKGROUND ART

Lead-acid batteries are used in various applications, including automotive, industrial, and other applications. A lead-acid battery is provided with an electrode plate group in which a positive electrode plate and a negative electrode plate are alternately stacked via a separator. The electrode plate is made up of a current collector and an electrode material held by the current collector.

For example, JP-A-51-60936proposes a lead grid plate for a lead-acid battery formed by press-punching a rolled plate of a lead alloy, characterized in that the thicknesses of inner longitudinal and transverse bars are made smaller than the thickness of an outer frame, the thickness of the outer frame is in the range of 0.8 to 1.5 mm, and the thicknesses of the inner bars are in the range of 0.6 to 0.8 mm. Further, JP-A-51-60936proposes a lead grid plate for a lead-acid battery characterized in that the inner frame of the lead grid plate obtained by press-punching a rolled plate of a lead alloy having a thickness of 1.2 to 1.5 mm is deformed in the thickness direction to set the thicknesses of the inner longitudinal and transverse bars in the range of 0.6 to 0.8 mm.

In the above lead grid plate, since the thickness of the inner frame is made smaller than the thickness of the outer frame so that the holding surface for an active material is recessed stepwise with respect to the outer frame, the holding amount of the active material per unit lead grid plate can be remarkably increased as compared to a lead grid plate having a uniform thickness, and moreover, the holding force of the active material can be greatly improved without roughening the surface of the lead grid plate.

Moreover, KR 2017 0092111 A describes a current collector with a frame rib having an upper element, a lower element and a pair of side elements and inner ribs inside the frame rib comprising longitudinal ribs extending from the upper element toward the lower element , and transverse ribs extending from one of the side elements toward the other of the side elements.

### SUMMARY OF THE INVENTION

### PROBLEMS TO BE SOLVED BY THE INVENTION

However, even if the holding force of the active material is improved, when the current collector corrodes, the elongation of the current collector occurs, and then, the electrode material may fall off. The elongation of the current collector due to its corrosion is considered to depend on the corrosion form of the current collector.

### MEANS FOR SOLVING THE PROBLEMS

The present invention provides a current collector for a lead-acid battery with the features of claim 1.

### ADVANTAGES OF THE INVENTION

According to the present invention, the elongation of the current collector due to its corrosion is reduced.

### BRIEF DESCRIPTION OF THE DRAWINGS

Fig. 1A is a plan view showing an external view of a current collector for a lead-acid battery according to one embodiment of the present invention.
Fig. 1B is a plan view showing the appearance of a current collector for a lead-acid battery according to another embodiment.
Fig. 2A is a cross-sectional photograph of a longitudinal rib perpendicular to a first direction.
Fig. 2B is a conceptual view of a section C.
Fig. 3 is a cross-sectional photograph of an inner rib in which a cross-section of a fibrous structure is observed.
Fig. 4 is a cross-sectional conceptual view showing the progress of corrosion of the inner rib.
Fig. 5 is a perspective view showing an external appearance of a lead-acid battery according to one embodiment of the present invention.
Fig. 6 is a graph showing the relationship between the first-portion rate, and the corrosion rate (a) and the deformation amount (b) of the current collector.
Fig. 7 is a graph showing the relationship between WLH/WLW and the width-elongation of the current collector.
Fig. 8 is a graph showing the relationship between the first-portion rate of the current collector and the rate to the initial capacity after repeated 5hR charge-discharge test.

### MODE FOR CARRYING OUT THE INVENTION

A current collector for a lead-acid battery has a frame rib, a lug provided on the frame rib, and inner ribs inside the frame rib. The inner ribs may have a net shape. The frame rib 110 includes an upper element 111 continuous with the lug 130, a lower element 112 facing the upper element 111, and a pair of side elements 113 and 114 coupling the upper element 111 with the lower element 112. The inner ribs include a longitudinal rib extending in a first direction from the upper element toward the lower element, and a transverse rib extending in a second direction from one side element toward the other side element. The first direction is a direction parallel to the side element, and the second direction is a direction parallel to the upper element and the lower element. Note that the current collector is also referred to as a grid body. However, the rib frame of the current collector or the grid body is not limited to a grid shape or a net shape.

The longitudinal rib may extend parallel to the side elements or may extend obliquely with respect to the side elements. The longitudinal rib may be straight, curved, or slightly bent. That is, the longitudinal rib may only extend so that a vector in the first direction is larger than a vector in the second direction.

The transverse rib may extend parallel to the upper or lower element and may extend obliquely with respect to the upper or lower element. The transverse rib may be straight, curved, or slightly bent. That is, the transverse rib may only extend so that a vector in the second direction is larger than a vector in the first direction.

The cross-section of the longitudinal rib perpendicular to the first direction, that is, the cross-section parallel to the upper element and parallel to the thickness direction (hereinafter also referred to as section C), shows a striped pattern of a metallic fibrous structure. The outer peripheral region of the section C is made up of a first portion in which the fibrous structure (direction of stripes) extends along the contour (hereinafter also referred to as a contour C) of the section C, and a second portion except for the first portion. The contour of the section C means a line corresponding to the outer surface of the longitudinal rib. The outer peripheral region of the section C is a peripheral region along the contour of the section C, has a depth of at least 55 µm or more from a line corresponding to the outer surface, and preferably has a depth of 100 µm or more.

In the second portion, no striped pattern may be observed, and a striped pattern extending in the depth direction of the outer peripheral region may be observed. Here, a percentage (hereinafter also referred to as a first-portion rate) of the contour (hereinafter also referred to as a first contour part) corresponding to the first portion to the total length of the contour C is 50% or more. That is, a percentage (hereinafter also referred to as a second-portion rate) of the contour (hereinafter also referred to as a second contour part) corresponding to the second portion to the total length of the contour C is 50% or less. When the first-portion rate or the second-portion rate is controlled in this way, the cross-section perpendicular to the fiber length of the fibrous structure is hardly exposed on the outer surface of the outer peripheral region of the section C. The cross-section perpendicular to the fiber length of the fibrous structure has many grain boundaries. The first portion and the second portion are different in the form of progress of corrosion.

In general, the corrosion of the current collector proceeds preferentially in the cross-section perpendicular to the fiber length of the fibrous structure exposed to the outer surface. On the outer surface of the first portion of the outer peripheral region, the fibrous metallic structure extends in the surface direction of the inner rib. That is, the crystal grain boundary extends longer in the surface direction of the inner rib than in the depth direction of the inner rib. Therefore, a corrosion layer formed in the first portion of the outer peripheral region is formed along the surface direction of the inner rib and is hardly formed to a deep position inside the inner rib. The corrosion layer formed along the outer surface of the first portion of the outer peripheral region has a low bonding strength with the current collector (inner rib). Thus, when gas is generated at the interface between the current collector (the outer surface of the first portion of the outer peripheral region) and the corrosion layer, the corrosion layer is relatively easily peeled off from the current collector. On the other hand, on the outer surface of the second portion of the outer peripheral region, the fibrous metallic structure extends in the depth direction of the inner rib. In other words, the grain boundary extends longer in the depth direction of the inner rib than in the surface direction of the inner rib. Hence, the corrosion layer formed along the outer surface of the second portion of the outer peripheral region has a high bonding strength with the current collector (inner rib). Even when gas is generated at the interface between the current collector (the second portion of the outer peripheral region) and the corrosion layer, the corrosion layer is hardly peeled off from the current collector, and stress is applied to the inner rib to deform the inner rib. That is, in the second portion of the outer peripheral region in which the fibrous metallic structure extends in the depth direction of the inner rib, the corrosion layer is less likely to be peeled off than in the first portion in which the fibrous metallic structure extends in the surface direction of the inner rib, and stress is more likely to be received from the corrosion layer, which causes the deformation of the current collector. Therefore, even when the amount of corrosion is the same, the higher the first-portion rate, the more the elongation of the current collector is reduced, and the more the electrode material is prevented from falling off.

On the other hand, in the cross-section perpendicular to the second direction of the transverse rib, that is, in the cross-section parallel to the side element and parallel to the thickness direction (hereinafter also referred to as a section G), the striped pattern of the metallic fibrous structure is hardly seen, and generally, a cross-section perpendicular to the fiber length of fibrous structure is seen. Almost the whole circumference of the outer peripheral region of the section G usually corresponds to the second portion of the section C. That is, almost the whole circumference of the outer peripheral region of the section G is made of a fibrous structure extending in the second direction. Therefore, in the outer peripheral region of the section G, the elongation of the current collector is reduced even when the corrosion amount is the same.

In the first portion in the section C, the corrosion of the longitudinal rib easily proceeds shallow, and the elongation of the current collector due to the shallow corrosion is small. On the other hand, in the second portion in the section C, the corrosion of the longitudinal rib easily proceeds deep in a wedge shape, and the elongation of the current collector due to the deep corrosion tends to increase. Here, the first-portion rate and the second-portion rate are intentionally controllable. Even when the longitudinal rib originally has a large second-portion rate, it is possible to deform the longitudinal rib so as to crush the second portion. For example, when the longitudinal rib is to be deformed by pressing, the first-portion rate can be arbitrarily controlled by the speed of a press, the pressure of the press, the shape of the die, or the like. That is, deforming the longitudinal rib by pressing is not a sufficient condition for increasing the first-portion rate, and it is necessary to appropriately control the pressing condition. When the first-portion rate is increased, the elongation of the current collector is reduced, and the falling of the electrode material is prevented. The present invention has been completed on the basis of these new findings.

When the first-portion rate is 50% or more, the degree of progress of corrosion tends to be uniform throughout the inner ribs. It is considered probable that by making the corrosion uniform in this manner, the uneven distribution of corroded portions is prevented, and the unidirectional elongation of the current collector is prevented.

That the fibrous structure (direction of stripes) extends along the contour of the section C in the first portion refers to the following state. First, the inside of the frame rib of the current collector is cut into three equal sections: an upper region on the upper element side of the frame rib; a lower region on the lower element side of the frame rib; and a middle region between the upper region and the lower region. At that time, in a plurality of longitudinal ribs, four rows of the cross-sections C perpendicular to the first direction (parallel to the upper element and the lower element and parallel to the thickness direction) are formed. That is, one row of the sections C is formed in each of the upper region and the lower region, and two rows of the sections C are formed in the middle region. When the trisection dividing line corresponds to the intersection (node) of the longitudinal and transverse ribs, the current collector may be divided into three sections with the dividing line slightly shifted in whole or in part so that the section C is formed in the longitudinal rib portion between the intersections as much as possible. When the inside of the frame rib of the current collector is divided into three sections, the dimension of the lug or foot is not considered.

Next, from any two rows out of the four rows, a plurality of sections C to be observed (at least 60% or more of the sections C included in the two rows) are selected A portion of the outer peripheral region of the selected section C in which the stripes of the fibrous structure have an angle of less than 45° with the contour of the section C is the first portion. Specifically, at an arbitrary point P on the contour C of each section C, a tangent S1 of the point P is drawn, and a perpendicular L of the tangent S1 is drawn so as to pass through the point P. Next, a tangent S2 of a stripe existing at a depth of 55 µm from the point P on the perpendicular L and intersecting the perpendicular L is drawn at the intersection. When an angle θ between the tangent S2 and the tangent S1 is less than 45°, the point P constitutes a first contour part corresponding to the first portion. Such observation is appropriately performed on the contour C, the length of the first contour part is specified, and the percentage of the first contour part to the total length of the contour C is determined as a first-portion rate. When the angle θ is 45° or more, the point P constitutes the second portion. Even when it cannot be determined whether or not the point P constitutes the first contour part because the fibrous structure cannot be observed, the point P constitutes the second portion. The first-portion rate is determined for all selected sections C, and the average is calculated.

When the cut portion is the intersection of the longitudinal rib and the transverse rib (node), the average may be obtained excluding the cross-section, and the cut position of the longitudinal rib may be shifted so as to be off the node.

In the formation of the section C, a current collector before being filled with the electrode material may be used. Alternatively, a lead-acid battery in a fully charged state is disassembled, an electrode plate is taken out and washed with water to remove an electrolyte solution, and the electrode plate is dried. Subsequently, the electrode material is removed from the electrode plate, and the electrode material adhering to the surface of the current collector is removed by mannitol. The prepared current collector may be embedded in a thermosetting resin so as to cover the whole of the prepared current collector to cure the resin, and thereafter, the current collector may be cut. The state of the metallic structure in the section C may only be observed by performing etching on the cross-section of the current collector and photographing with a microscope.

Note that the lead-acid battery in the fully charged state refers to a chemically converted lead-acid battery having been fully charged. So long as after chemical conversion, the lead-acid battery may be fully charged immediately after chemical conversion or after a lapse of time from chemical conversion. For example, a chemically converted lead-acid battery in use (preferably at the initial stage of use) may be fully charged. The battery in the initial stage of use refers to a battery that has not been used for a long time and has hardly been degraded.

In the present specification, in the case of a flooded-type battery, the fully charged state of the lead-acid battery is a state where in a water bath at 25°C ± 2°C, the constant current charge is performed at a current (A) 0.2 times a numerical value indicated as a rated capacity (Ah) until 2.5 V/cell is reached, and thereafter, the constant current charge is performed at a current (A) 0.2 times the numerical value indicated as the rated capacity (Ah) for two hours. In the case of a valve regulated battery, the fully charged state of the lead-acid battery is a state where a constant current constant voltage charge of 2.23 V/cell is performed in an air bath at 25°C ± 2°C at a current 0.2 times a numerical value indicated as the rated capacity (Ah), and charge is completed when the charge current at the constant voltage charge becomes 0.005 times the numerical value indicated as the rated capacity (Ah). Note that the numerical value indicated as the rated capacity is a numerical value in units of Ah. The unit of the current which is set based on the numerical value indicated as the rated capacity is A.

The thickness of the first portion may only be 55 µm or more. When the thickness of the region in which the striped pattern of the fibrous structure is observed is less than 55 µm, even in the outer peripheral region that appears at a glance as the first portion, the region is regarded not as the first portion but as the second portion. The first portion having a thickness of 55 µm or more has a sufficient action to prevent penetration of corrosion to the inside. In this case, the penetration of corrosion to the inside is likely to become highly uniform throughout the inner ribs. Therefore, the elongation of the current collector is remarkably reduced, and the falling of the electrode material is also remarkably prevented. From the viewpoint of further improving the prevention of the corrosion of the longitudinal rib from penetrating to the inside, the thickness of the first portion is preferably 100 µm or more.

The thickness of the first portion in the section C may only be measured as follows. First, a tangent S1 is drawn at an arbitrary point P1 on the first contour part, and a perpendicular L of the tangent S1 is drawn so as to pass through the point P1. Next, at a point Px moving from the point P1 to a depth of X µm on the perpendicular L, a tangent S2 of a stripe intersecting the perpendicular L is continuously drawn. At this time, when the angle between the tangent S1 and the tangent S2 is continuously 45° or less, it can be said that the thickness of the first portion immediately below the point P1 is X µm or more.

The thickness of the inner rib may only be, for example, from 0.7 mm to 3 mm. The rib width of the inner rib may only be, for example, from 0.7 mm to 3 mm.

The first-portion rate may only be 50% or more but is preferably 60% or more or 70% or more. The first-portion rate is preferably less than 100%, more preferably 95% or less, and still more preferably 90% or less. When the first-portion rate reaches 100%, the degree of progress of corrosion becomes uniform over the entire circumference of the inner rib, but when the first-portion rate exceeds 95%, for example, a decrease in the rate to the initial capacity after the charge and discharge of the capacity by a five-hour-rate current tends to be large. For example, the rate of the capacity obtained by discharge around five cycles to the initial capacity may fall below 80%. On the other hand, when the first-portion rate is 95% or less, the rate of the capacity around five cycles to the initial capacity can be maintained at 90% or more.

When the charge and discharge are repeated with a current at a five-hour rate, the expansion and contraction of the electrode material are repeated, and the interface between the current collector and the electrode material becomes likely to be separated physically. This is considered to be the cause of the decrease in the initial capacity ratio. It is conceivable that the first portion easily forms a layered shallow corrosion layer, and the second portion forms a wedge-shaped deep corrosion layer. Therefore, the binding force between the current collector and the electrode material is higher in the second portion than in the first portion. From the viewpoint of improving the binding force between the current collector and the electrode material, the second-portion rate is preferably 5% or more, and more preferably 10% or more.

The shape of the section C is not particularly limited but is preferably octagonal. When the section C is an octagon, the inner angle of the apex does not become excessively small, and the effect of preventing corrosion near the apex is easily enhanced. In order to form a longitudinal rib having an octagonal section C, for example, a longitudinal rib having a rectangular section C may only be deformed. For example, the inner rib may only be pressed. At that time, the pressing conditions of the inner ribs may only be appropriately selected so that the first-portion rate is 50% or more and is preferably 60% or more. By forming the section C in an octagon shape, it is easy to control the percentage of the length of the first contour part to the total length of the contour C to be less than 100%, and as a result, it is also easy to control the first-portion rate to be 95% or less or 90% or less. Note that the octagonal shape does not have to be a strictly octagonal shape in the mathematical sense, and the apex may be slightly rounded, or each side may be bent slightly.

When the current collector is a current collector punched out of a stretched sheet of lead or a lead alloy, a total length WLW of the inner dimensions of the transverse rib and a total length WLH of the inner dimensions of the longitudinal rib may satisfy WLH/LW ≥ 0.8 and may satisfy WLH/WLW ≥ 1.3. In this case, the corrosion of the current collector tends to penetrate to the inside, and hence the elongation of the current collector is reduced more remarkably by controlling the first-portion rate to be 50% or more. Here, the inner dimension length of each inner rib means the length in the inner dimension of the grid square, that is, the length (bar length) of the side of a rectangular space defining the grid square. Note that the direction of the length WLW (a direction in which the transverse rib elongates) usually corresponds to the stretching direction of the stretched sheet (machine direction (MD)).

The current collector according to the present invention may be applied to either a positive electrode plate or a negative electrode plate. That is, the electrode plate according to the present invention can be either the positive electrode plate or the negative electrode plate. However, the current collector according to the present invention is particularly suitable as a current collector for the positive electrode plate from the viewpoint of reducing the elongation of the current collector due to its corrosion

Hereinafter, embodiments of the present invention will be described with reference to the drawings.

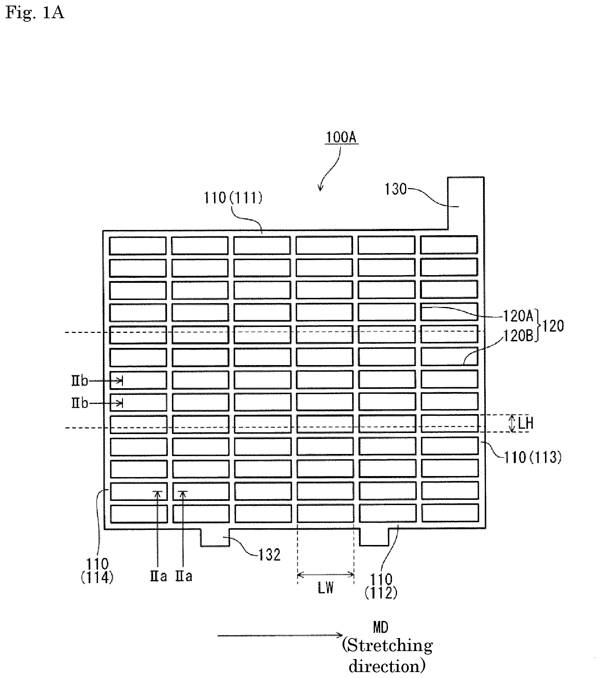

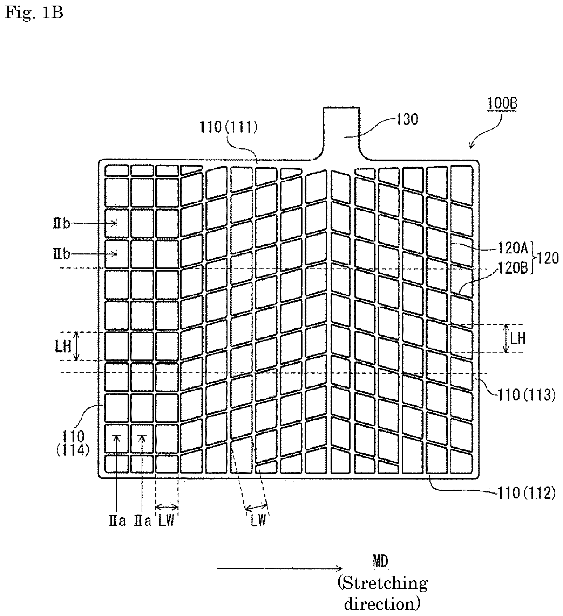

Figs. 1A and 1B are plan views showing the appearance of current collectors 100A and 100B according to one embodiment and another embodiment of the present invention, respectively. Each of the current collectors 100A and 100B has a frame rib 110 and net-like inner ribs 120 inside the frame rib 110. The frame rib 110 includes an upper element 111 continuous with a lug 130, a lower element 112 facing the upper element 111, and a pair of side elements 113 and 114 coupling the upper element 111 with the lower element 112. Dashed lines indicate the boundaries that divide the inner ribs into three equal sections: upper, middle, and lower regions. The current collector 100A of Fig. 1A has a lower protrusion (also referred to as a foot) 132 continuous with the lower element 112. In the current collector 100B of Fig. 1B, the transverse rib extends obliquely with respect to the upper or lower element. LH indicates the inner dimension length per grid of the longitudinal rib, and LW indicates the inner dimension length per grid of the transverse rib.

The current collectors 100A and 100B are, for example, grid bodies punched out of stretched sheets of lead or a lead alloy, and the stretching direction is a direction indicated by an arrow MD in Fig. 1. A section C of a longitudinal rib 120Ais a cross-section at line IIa-IIa in Fig. 1, and a section G of a transverse rib 120B is a cross-section at line IIb-IIb. The metallic structure of the stretched sheet easily forms a layered or fibrous structure extending in the stretching direction. Hence a striped pattern is generated in the section C. On the other hand, in the section G, a pattern due to the cutting of a layered or fibrous structure can occur.

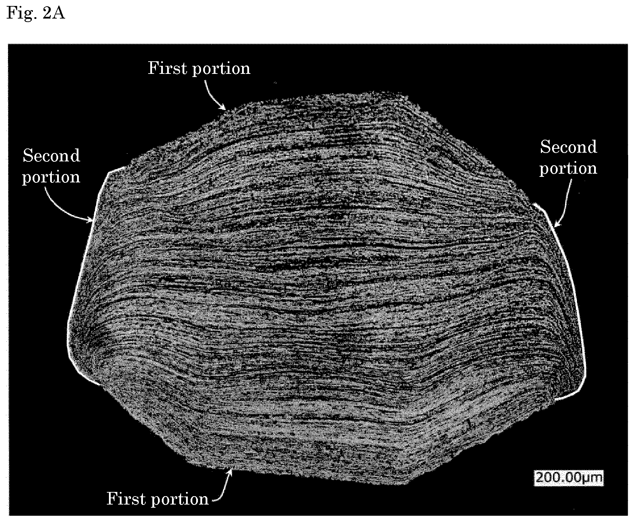

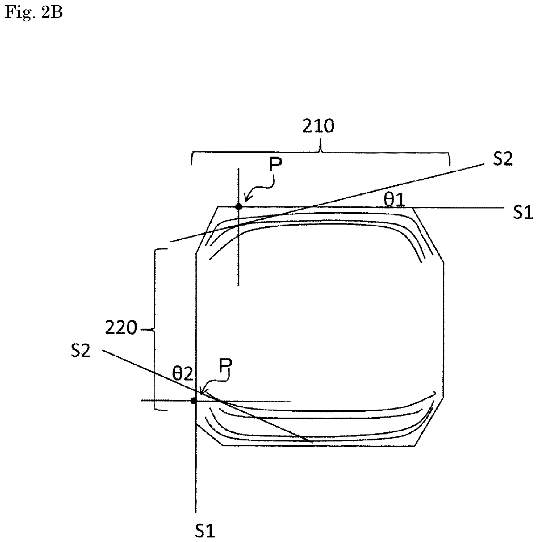

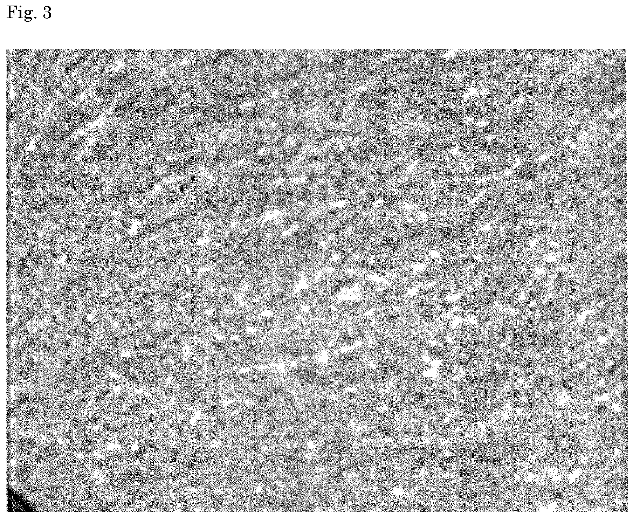

Fig. 2A is an example of a photograph of the section C of the longitudinal rib 120A, and the cross-section has an octagonal shape and shows the striped pattern of the metallic fibrous structure. Fig. 2B is a conceptual view of an example of an octagonal section C imitating Fig. 2A. On the other hand, Fig. 3 is an example of a photograph of the section G of the transverse rib 120B, and the cross-section has a pattern formed by a cross-section perpendicular to the fiber length of the metallic fibrous structure. In Fig. 2B, most of the left and right sides of the octagonal section C are a second portion 220, and the other outer peripheral region is a first portion 210. In the first portion 210, the stripe (tangent S2) of the fibrous structure has an angle θ1 of less than 45° with the contour (line S1) of the section C. On the other hand, in the second portion 220, no stripe of the fibrous structure can be confirmed, or the stripe (tangent S2) has an angle θ2 exceeding 45° with the contour (line S1) of the section C. In Fig. 2A, there is a region in the outermost layer of the second portion 220 where a striped pattern of a fibrous structure having a thickness of less than about 55 µm is observed, but such a thin portion does not constitute the first portion 210.

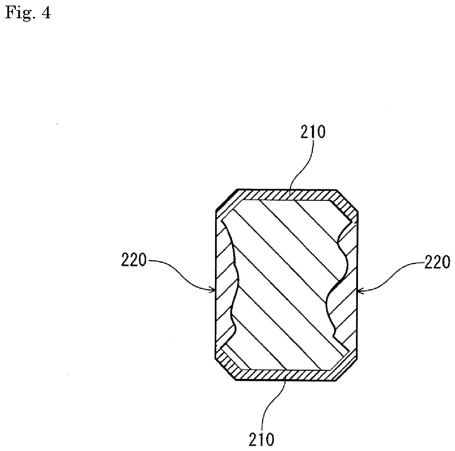

Fig. 4 is a conceptual view of the section C showing the progress of corrosion of the inner rib. A portion where the shallow corrosion layer has been formed is the first portion where the fibrous structure extends along the contour of the section C, and even when corrosion proceeds, the corrosion layer is hardly formed deep. On the other hand, peeling tends to occur near the interface between the current collector and the electrode material. It is thus considered that the stress of the current collector trying to deform is easily relaxed. On the other hand, a portion where a wedge-shaped deep corrosion layer has been formed is the second portion. When a deep corrosion layer is formed, non-uniform deformation of the current collector easily occurs, the current collector elongates, and the electrode material easily falls off.

Next, the electrode plate of the lead-acid battery will be described. The electrode plate for the lead-acid battery according to the present invention includes the current collector described above and an electrode material held by the current collector. Although the electrode material is a portion except for the current collector, when a mat mainly made of nonwoven fabric is stuck to the electrode plate, the mat is not included in the electrode material. However, the thickness of the electrode plate is a thickness including the mat. This is because the mat is used integrally with the electrode plate. However, when the mat is stuck to the separator, the thickness of the mat is included in the thickness of the separator.

The current collector is suitably applied to the positive electrode plate but may be applied to a negative electrode plate.

The density of the electrode material may only be, for example, 3.6 g/cm³ or more. From the viewpoint of ensuring a sufficient initial capacity, the electrode material density is preferably 4.8 g/cm³ or less. However, at the first-portion rate being less than 60%, the electrode plate easily cracks when the electrode material density becomes 4.4 g/cm³ or more. Thus, for example, when the charge and discharge are repeated at about a five-hour-rate current, the deterioration may proceed, or the charge acceptance property after overcharge may be lowered. On the other hand, at the first-portion rate being 60% or more, even when the electrode material density is as high as 4.4 g/cm³ or more, a crack is hardly generated in the electrode plate, and deterioration in the case of repeated discharge and deterioration in the charge acceptance property after overcharge are prevented.

The density of the electrode material means the value of the bulk density of the chemically converted electrode material in the fully charged state and is measured as follows. The battery after chemical conversion or in use (preferably at the initial stage of use) is fully charged and then disassembled, and the obtained electrode plate is washed with water and dried to remove an electrolyte solution in the electrode plate. (The washing with water is performed until it is confirmed that the color of the pH test paper does not change by pressing the pH test paper against the surface of the negative electrode plate washed with water. However, the washing with water is performed within two hours. The negative electrode plate washed with water is dried at 60°C ± 5°C in a reduced pressure environment for about six hours. The positive electrode plate washed with water is dried at 60°C ± 5°C for about 6 hours. After drying, when the sticking member is included in the negative electrode plate, the sticking member is removed from the negative electrode plate by peeling.)Subsequently, the electrode material is separated from the electrode plate to obtain an uncrushed measurement sample. A sample is charged into a measurement case and evacuated, which is then filled with mercury at a pressure of 0.5 psia to 0.55 psia (≈ 3.45 kPa or more and 3.79 kPa or less) to measure the bulk volume of the electrode material, and the mass of the measurement sample is divided by the bulk volume to determine the bulk density of the electrode material. A volume obtained by subtracting the injection volume of mercury from the volume of the measurement case is defined as the bulk volume.

The density of the electrode material can be measured using an automatic porosimeter (Auto Pore IV 9505) manufactured by Shimadzu Corporation.

When the charge-discharge cycle is repeated with a current at a five-hour rate, the expansion and contraction of the electrode material are repeated, so that the interface between the current collector and the electrode material becomes likely to be separated physically. Assuming that the amount of electrode material is constant, the higher the electrode material density is made, the more its volume decreases and the more the amount of over-paste decreases. The over-paste refers to a portion of the electrode material that covers the outermost surface of the current collector in the thickness direction. Generally, when the amount of the over-paste is small, it is considered that the electrode plate is more likely to deteriorate, and a decrease in the discharge capacity due to the repetition of the cycle becomes large. As above, it is considered that the more the interface between the current collector and the electrode material is likely to be separated physically due to the repetition of the charge-discharge cycles, the more the effect of setting the first-portion rate to 50% or more, further to 60% or more, becomes remarkable.

Next, a maximum thickness T of the positive electrode material and a thickness t of the current collector for a lead-acid battery preferably satisfy T - t ≤ 1 mm. (T - t)/2 corresponds to the thickness of the over-paste. Since the current collector has excellent corrosion resistance and hardly elongates due to corrosion, it is not necessary to cover the current collector with a thick electrode material from the viewpoint of preventing corrosion (or preventing the contact with the electrolyte solution). Thus, for example, even in a situation where the current collector is exposed from the electrode material, and the current collector is about to come into direct contact with the electrolyte solution, a deterioration in the current collector due to corrosion hardly proceeds. Therefore, even an electrode plate satisfying T-t ≤ 1 mm can be used for a long period of time, and T - t < 0 mm may hold.

### (Negative electrode plate)

The negative electrode plate of the lead-acid battery is made up of a negative current collector and a negative electrode material. A negative current collector for a large lead-acid battery may be formed by casting lead (Pb) or a lead alloy.

As the lead or lead alloy used for the current collector, a Pb-Ca based alloy, a Pb-Ca-Sn based alloy, lead having a purity of three nines or higher, and the like are used preferably. The lead or lead alloy may further contain Ba, Ag, Al, Bi, As, Se, Cu, or the like as an additive element. The negative current collector may have a plurality of lead alloy layers having different compositions.

The negative electrode material contains, as an essential component, a negative active material (lead or lead sulfate), which exhibits a capacity by an oxidation-reduction reaction, and can contain an organic expander, a carbonaceous material, and an additive such as barium sulfate. The negative active material in a charged state is spongy lead, but a non-chemically converted negative electrode plate is usually prepared using a lead powder.

At least one kind selected from the group consisting of lignins and/or synthetic organic expanders may be used as the organic expander. Examples of the lignins include lignin and lignin derivatives. Examples of the lignin derivative include lignin sulfonic acid or its salt (alkali metal salt such as sodium salt) The organic expander is an organic polymer containing a sulfur element and generally contains a plurality of aromatic rings in the molecule and the sulfur element as a sulfur-containing group. Among the sulfur-containing groups, a sulfonic acid group or a sulfonyl group, which is a stable form, is preferred. The sulfonic acid group may be present in an acid form or in a salt form like a Na salt.

As a specific example of the organic expander, a condensate obtained using an aldehyde compound (aldehyde or its condensate such as formaldehyde), which is a compound having a sulfur-containing group and an aromatic ring, is preferable. Examples of the aromatic ring include a benzene ring and a naphthalene ring. When the compound having an aromatic ring has a plurality of aromatic rings, the plurality of aromatic rings may be coupled by direct bonding or a coupling group (e.g., alkylene group, sulfone group, etc.). Examples of such a structure include biphenyl, bisphenylalkane, and bisphenylsulfone. Examples of the compound having an aromatic ring include a compound having the aromatic ring described above and a hydroxy group and/or an amino group. The hydroxy group and the amino group may be directly bonded to the aromatic ring or may be bonded as an alkyl chain having the hydroxy group or the amino group. The compound having an aromatic ring is preferably a bisphenol compound, a hydroxybiphenyl compound, a hydroxynaphthalene compound, a phenol compound, or the like. The compound having an aromatic ring may further have a substituent. The organic expander may contain one kind of residues of these compounds or may contain a plurality of kinds thereof. The bisphenol compound is preferably bisphenol A, bisphenol S, bisphenol F, or the like.

The sulfur-containing group may be directly bonded to the aromatic ring contained in the compound and may, for example, be bonded to the aromatic ring as an alkyl chain having the sulfur-containing group.

Further, for example, a condensate obtained using an aldehyde compound of the compound having the aromatic ring described above and a monocyclic aromatic compound (aminobenzenesulfonic acid, alkylaminobenzenesulfonic acid, phenolsulfonic acid, or its substituent) may be used as the organic expander.

The content of the organic expander contained in the negative electrode material is, for example, preferably 0.01% by mass or more, more preferably 0.02% by mass or more, and still more preferably 0.05% by mass or more. On the other hand, the content is preferably 1.0% by mass or less, more preferably 0.8% by mass or less, and still more preferably 0.5% by mass or less. These lower and upper limits can be combined arbitrarily. Here, the content of the organic shrinkage inhibitor contained in the negative electrode material is a content in the negative electrode material collected from a chemically converted lead-acid battery in the fully charged state.

As the carbonaceous material contained in the negative electrode material, carbon black, graphite, hard carbon, soft carbon, and the like can be used. Examples of the carbon black include acetylene black, furnace black, and lamp black. Furnace black also includes ketjen black (product name). The graphite may be a carbon material including a graphite-type crystal structure and may be either artificial graphite or natural graphite.

The content of the carbonaceous material in the negative electrode material is, for example, preferably 0.05% by mass or more, and more preferably 0.2% by mass or more. On the other hand, the content is preferably 4.0% by mass or less, more preferably 3% by mass or less, and still more preferably 2% by mass or less. These lower and upper limits can be combined arbitrarily.

The content of barium sulfate in the negative electrode material is, for example, preferably 0.5% by mass or more, more preferably 1% by mass or more, and still more preferably 1.3% by mass or more. On the other hand, the content is preferably 3.0% by mass or less, more preferably 2.5% by mass or less, and still more preferably 2% by mass or less. These lower and upper limits can be combined arbitrarily.

Hereinafter, a method of quantifying the amounts of the organic shrinkage inhibitor, the carbonaceous material, and the barium sulfate contained in the negative electrode material will be described. Prior to quantitative analysis, a chemically converted lead-acid battery is fully charged and disassembled to obtain a negative electrode plate to be analyzed. The obtained negative electrode plate is washed with water and dried to remove the electrolyte solution in the negative electrode plate. (The washing with water is performed until it is confirmed that the color of the pH test paper does not change by pressing the pH test paper against the surface of the negative electrode plate washed with water. However, the washing with water is performed within two hours. The negative electrode plate washed with water is dried at 60°C ± 5°C in a reduced pressure environment for about six hours. When the sticking member is included in the negative electrode plate after drying, the sticking member is removed from the negative electrode plate by peeling). Next, the negative electrode material is separated from the negative electrode plate to obtain an uncrushed sample S.

### (Organic expander)

The uncrushed sample S is crushed, and the crushed sample S is immersed in a 1 mol/L NaOH aqueous solution to extract the organic expander. An insoluble component is removed from a NaOH aqueous solution containing the extracted organic expander by filtration. The obtained filtrate (hereinafter also referred to as a filtrate to be analyzed) is desalted, concentrated, and dried to obtain a powder of the organic expander (hereinafter also referred to as a powder to be analyzed). Desalting may be performed by immersing the filtrate in distilled water in a dialysis tube.

The organic expander is specified by obtaining information from an infrared spectral spectrum of the powder to be analyzed, an ultraviolet-visible absorption spectrum of a solution obtained by dissolving the powder to be analyzed in distilled water or the like, a nuclear magnetic resonance (NMR) spectrum of a solution obtained by dissolving the powder to be analyzed in a solvent such as heavy water, a pyrolysis gas chromatographymass spectrometry (GC-MS) capable of obtaining information on individual compounds constituting the substance, or the like.

The ultraviolet-visible absorption spectrum of the filtrate to be analyzed is measured. The content of the organic expander in the negative electrode material is quantified using a spectral intensity and a calibration curve prepared in advance. When the structural formula of the organic expander to be analyzed cannot be exactly specified, and the calibration curve of the same organic expander cannot be used, the calibration curve is prepared using an available organic expander exhibiting an ultraviolet-visible absorption spectrum, an infrared spectral spectrum, an NMR spectrum, and the like similar to those of the organic expander to be analyzed.

### [Carbonaceous material and barium sulfate]

The uncrushed sample S is crushed, 50 ml of nitric acid having a concentration of 20% by mass is added to 10 g of the crushed sample S, and the mixture is heated for about 20 minutes to dissolve a lead component as lead nitrate. Next, a solution containing lead nitrate is filtered, and solids such as carbonaceous materials and barium sulfate are filtered off.

The obtained solid is dispersed in water to form a dispersion, and then components except for the carbonaceous material and barium sulfate (e.g., reinforcing material) are removed from the dispersion by using a sieve. Next, the dispersion is subjected to suction filtration using a membrane filter with its mass measured in advance, and the membrane filter is dried with the filtered sample in a dryer at 110°C ± 5°C. The filtered sample is a mixed sample of a carbonaceous material and barium sulfate. A mass (A) of the mixed sample is measured by subtracting the mass of the membrane filter from the total mass of the dried mixed sample and the membrane filter. Thereafter, the dried mixed sample is placed in a crucible together with the membrane filter, and the crucible is heated to a temperature of 700°C or higher. The remaining residue is barium oxide. A mass (B) of barium sulfate is determined by converting the mass of barium oxide to the mass of barium sulfate. The mass of the carbonaceous material is calculated by subtracting the mass B from the mass A.

The negative electrode plate can be formed in such a manner that a negative electrode current collector is filled with a negative electrode paste, which is then cured and dried to prepare a non-chemically converted negative electrode plate, and then the non-chemically converted negative electrode plate is chemically converted. The negative electrode paste is prepared by adding water and sulfuric acid to a lead powder and various additives and kneading them. In the curing process, it is preferable to cure the non-chemically converted negative electrode plate at room temperature or at a higher temperature and humidity.

The chemical conversion can be performed by charging the electrode plate group in a state where the electrode plate group including the non-chemically converted negative electrode plate is immersed in the electrolyte solution containing sulfuric acid in the container of the lead-acid battery. However, the chemical conversion may be performed before the lead-acid battery or the electrode plate group is assembled. The chemical conversion produces spongy lead.

### (Positive electrode plate)

The positive electrode plate of the lead-acid battery includes a positive current collector and a positive electrode material. The positive current collector can be formed by press-punching a sheet of lead or a lead alloy. The sheet is preferably a stretched sheet (also referred to as a rolled plate) subjected to stretching. The stretched sheet may be a uniaxially stretched sheet or a biaxially stretched sheet.

As the lead or lead alloy used for the positive current collector, a Pb-Ca alloy or a Pb-Ca-Sn alloy is preferred in terms of corrosion resistance and mechanical strength, and lead having a purity of three nines or higher may be used. The positive current collector may have lead alloy layers having different compositions, and a plurality of alloy layers may be used.

The positive electrode material contains a positive active material (lead dioxide or lead sulfate) that develops a capacity through an oxidation-reduction reaction. The positive electrode material may optionally contain an additive.

A non-chemically converted positive electrode plate is obtained in such a manner that a positive current collector is filled with a positive electrode paste, which is then cured and dried. Thereafter, the non-chemically converted positive electrode plate is converted chemically. The positive electrode paste is prepared by kneading a lead powder, an additive, water, sulfuric acid, and the like.

### (Electrolyte solution)

The electrolyte solution is an aqueous solution containing sulfuric acid and may be gelled as necessary. The specific gravity of the electrolyte solution in the chemically converted lead-acid battery in the fully charged state is, for example, 1.20 to 1.35 at 20°C and preferably 1.25 to 1.32.

### (Separator)

A separator is usually disposed between the negative electrode plate and the positive electrode plate. A nonwoven fabric, a microporous film, or the like is used as the separator. The nonwoven fabric is a mat in which fibers are intertwined without being woven and is mainly made of fibers. For example, 60% by mass or more of the nonwoven fabric is formed of fibers. As the fiber, glass fiber, polymer fiber, pulp fiber, or the like can be used. The nonwoven fabric may contain components in addition to the fibers, such as an acid-resistant inorganic powder and a polymer as a binder. The microporous film is a porous sheet mainly made of components except for fiber components and is obtained by, for example, extrusion molding a composition containing, for example, a pore-forming additive (polymer powder, oil, etc.) into a sheet shape and then removing the pore-forming additive to form pores. The microporous film is preferably made mainly of a polymer component. As the polymer material, a polyolefin such as polyethylene or polypropylene is preferred.

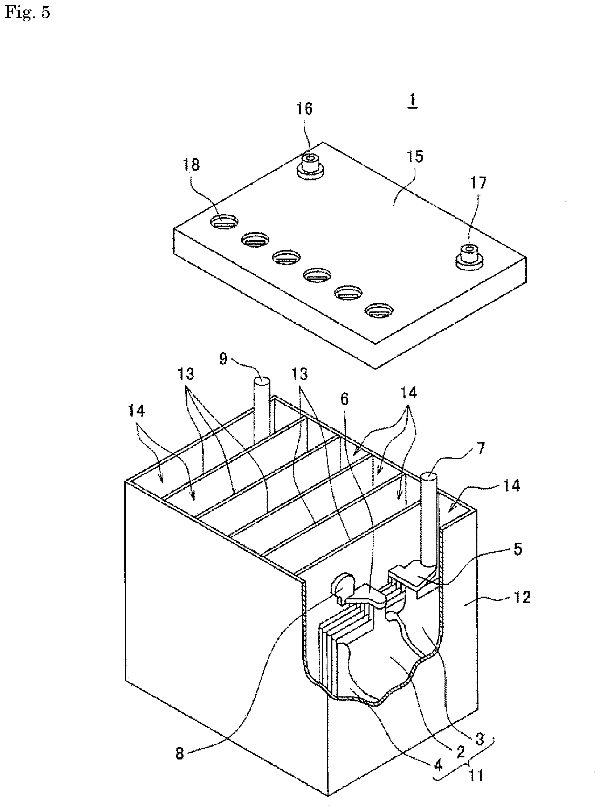

Fig. 5 shows the appearance of an example of the lead-acid battery according to the embodiment of the present invention.

A lead-acid battery 1 includes a container 12 storing an electrode plate group 11 and an electrolyte solution (not shown). The inside of the container 12 is partitioned into a plurality of cell chambers 14 by partitions 13. In each cell chamber 14, one electrode plate group 11 is housed. The opening of the container 12 is closed with a lid 15 having a negative electrode terminal 16 and a positive electrode terminal 17. The lid 15 is provided with a vent plug 18 for each cell chamber. At the time of water addition, the vent plug 18 is removed to supply a water addition liquid. The vent plug 18 may have a function of discharging gas generated in the cell chamber 14 to the outside of the battery.

The electrode plate group 11 is configured by stacking a plurality of negative electrode plates 2 and positive electrode plates 3 with a separator 4 interposed therebetween. Here, the bag-shaped separator 4 storing the negative electrode plate 2 is shown, but the form of the separator is not particularly limited. In the cell chamber 14 located at one end of the container 12, a negative electrode shelf 6 for connecting lugs 2a of the plurality of negative electrode plates 2 in parallel is connected to a through-connector 8, and a positive electrode shelf 5 for connecting lugs 3a of the plurality of positive electrode plates 3 in parallel is connected to a positive electrode pole 7. The positive electrode pole 7 is connected to the positive electrode terminal 17 outside the lid 15. In the cell chamber 14 located at the other end of the container 12, a negative electrode pole 9 is connected to the negative electrode shelf 6, and the through-connector 8 is connected to the positive electrode shelf 5. The negative electrode pole 9 is connected to the negative electrode terminal 16 outside the lid 15. Each through-connector 8 passes through a through-hole provided in the partition 13 and connects the electrode plate groups 11 of the adjacent cell chambers 14 in series.

Although Fig. 5 shows an example of a flooded-type battery (vented battery), the lead-acid battery may be a valve regulated battery (VRLA type).

Next, the performance evaluation of the lead-acid battery will be described.

### [Evaluation of test battery]

### (A) First single-plate overcharge test

An overcharge test is performed using a predetermined test battery in a water bath at 75°C ± 2°C with a constant current of 1.7 A (current density: 0.0054 A/cm²) for five days, and thereafter, the operation of pausing for two days (one week) is repeated for three weeks. The apparent current collector area at the time of calculating the current density is set twice the product of the height and width of the outer dimensions of the frame ribs of the positive current collector.

### (a) Corrosion rate

After the three-week overcharge test, the test battery in a fully charged state is disassembled, the positive current collector is taken out and washed with water, a corrosion layer is removed with mannitol, and the test battery is dried. Thereafter, the corrosion rate is calculated by the following formula. Corrosion rate (%) = {(Mass of positive current collector before overcharge test - Mass of positive current collector with corrosion layer removed by mannitol treatment after overcharge test)/(Mass of positive current collector before overcharge test)} × 100

### (b) Width-elongation and height-elongation of positive current collector

After the three-week overcharge test, the test battery is disassembled, the dimensions of the portion of the frame rib of the positive current collector which is most swollen in the first direction (height direction) and the second direction (width direction) are measured, and the width-elongation amount and the height-elongation amount are determined by comparison with the initial dimensions.

### (B) Second single-plate overcharge test

The following operation (one week) is repeated for four weeks: an overcharge test is performed using a predetermined test battery in a water bath at 75°C ± 2°C with a constant current (a current (A) which is 0.2 times a value obtained by dividing a numerical value indicated as a five-hour-rate rated capacity (Ah) by the number of positive electrode plates per cell) for five days and is then suspended for two days. Note that the numerical value indicated as the rated capacity is a numerical value in units of Ah. The unit of the current which is set based on the numerical value indicated as the rated capacity is A. For example, in the case of a battery made up of six positive electrode plates and seven negative electrode plates and having a five-hour-rate rated capacity of 30 Ah and 12 V, a rated capacity of a single plate cell (one positive electrode plate and two negative electrode plates) is calculated as 30 ÷ 6 = 5 Ah, and the current value in the single-plate overcharge test is 5 × 0.2 = 1 A.

After the four-week overcharge test, the battery in a fully charged state is disassembled, the positive electrode plate is taken out and washed with water to remove the electrolyte solution, and the positive electrode plate is dried. Subsequently, the electrode material is removed from the positive electrode plate, and the electrode material adhering to the surface of the current collector is removed by mannitol. The dimension of the portion of the frame rib of the positive current collector which swells most in the second direction (width direction) is measured, and the width elongation amount is determined in comparison with the initial dimension.

### (C) Repeated 5hR charge-discharge test

A repeated 5hR charge-discharge test is performed using the predetermined test battery in the following procedure in a water bath at 25°C ± 2°C. The battery is discharged at a constant current (a current (Ah) 0.2 times the numerical value indicated as the five-hour-rate rated capacity (Ah)) up to 1.75 V/cell and then charged at the constant current (the current (A) 0.2 times the numerical value indicated as the five-hour-rate rated capacity (Ah)) up to 135% of the amount of discharge. The same cycle is repeated five times to determine a percentage of a 5hR discharge capacity at a fifth cycle to an initial capacity (5hR discharge capacity) (rate to initial capacity). Note that the numerical value indicated as the rated capacity is a numerical value in units of Ah. The unit of the current which is set based on the numerical value indicated as the rated capacity is A.

Embodiments of the present invention will be described more specifically below based on examples and comparative examples, but the present invention is not limited to the following examples.

First, common items will be described focusing on the case of using a grid body A1.

### (1) Preparation of grid body A1

A rolled sheet of a Pb-Ca-Sn alloy is punched, and an inner rib is pressed to obtain a grid body A1 as a current collector.

The specifications of the grid body A1 are as follows:
Inner rib thickness: 0.95 mm
Height H of frame rib: 115 mm
Width W of frame rib: 137 mm
First-portion rate of section C: 60%
Shape of section C: Octagonal
Ratio of WLH to WLW: WLH/WLW = 1.47 (WLH = 2392 mm, WLW = 1628 mm)

### (2) Preparation of positive electrode plate

A positive electrode paste containing lead powder is prepared, the grid body A1 is filled with the positive electrode paste, and cured and dried to prepare a non-chemically converted positive electrode plate. The density of the positive electrode material after chemical conversion is adjusted to 3.6 g/cm³.

### (3) Preparation of negative electrode plate

A negative electrode paste is prepared by mixing lead powder, water, diluted sulfuric acid, barium sulfate, carbon black, and an organic expander. A grid body A1 is filled with the negative electrode paste and cured and dried to obtain a non-chemically converted negative electrode plate.

### (4) Preparation of test battery

In each of the following test batteries, an aqueous sulfuric acid solution is used as an electrolyte solution. The specific gravity of the electrolyte solution for use in a test battery X at 20°C is 1.28. In test batteries Y and Z, the specific gravity of the electrolyte solution at 20°C is adjusted to 1.28 in each of the chemically converted test batteries in a fully charged state after chemical conversion.

### (X) Preparation of test battery X

The test battery X is assembled using a positive current collector that supports no positive electrode material. The test battery X is made up of one positive current collector, two chemically converted negative electrode plates supporting the positive current collector, and an electrolyte solution. The negative electrode plate is housed in a bag-shaped separator.

### (Y) Preparation of test battery Y

The test battery Y (2 V, rated five-hour-rate capacity of 6 Ah) is assembled using a non-chemically converted positive electrode plate including a positive current collector and a positive electrode material. The test battery Y is made up of one non-chemically converted positive electrode plate, two non-chemically converted negative electrode plates supporting the positive electrode plate, and an electrolyte solution, and is chemically formed in an electrolyte solution. The negative electrode plate is housed in a bag-shaped separator.

### (Z) Preparation of test battery Z

The test battery Z is assembled using a positive electrode plate including a positive current collector and a positive electrode material. A non-chemically converted negative electrode plate is housed into a bag-like separator, and an electrode group is formed of eight non-chemically converted negative electrode plates and eight non-chemically converted positive electrode plates. The electrode group is housed into a polypropylene container together with an electrolyte solution and subjected to chemical conversion in the container to prepare the test battery Z (12 V, five-hour-rate rated capacity of 48 Ah).

### <<Example 1>>

The grid body A1 prepared as described above and the negative electrode plate are used to assemble a battery A1 (2 V, rated five-hour-rate capacity of 6 Ah) as the test battery X.

### <<Examples 2 and 3>>

By pressing the inner ribs, the first-portion rate of the section C is changed to 82.6% or 56.2% to prepare grid bodies A2 and A3, and batteries A2 and A3 are prepared as the test batteries X.

### <<Comparative Example 1>>

By pressing the inner ribs, the first-portion rate of the section C is changed to 45.7% to prepare a grid body B1, and a battery B1 is prepared as the test battery X.

### (A) First single-plate overcharge test

Table 1 shows the results of the first single-plate overcharge test for the batteries A1 to A3 and the battery B1.

**[Table 1]**

| | First-portion rate (%) | Corrosion rate (%) | Width-elongation (mm) | Height-elongation (mm) |
|---|---|---|---|---|
| B1 | 45.7 | 76.0 | 5.6 | 3.8 |
| A1 | 60.0 | 73.9 | 2.5 | 0 |
| A2 | 82.6 | 70.6 | 0.35 | 0 |
| A3 | 56.2 | 73.1 | 5.5 | 1.0 |

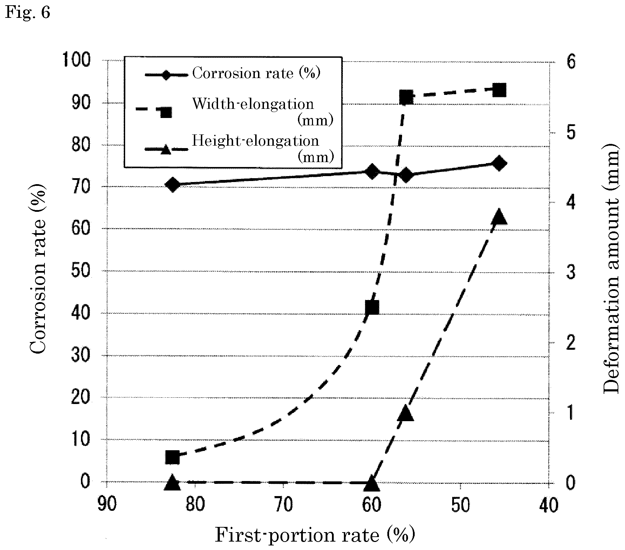

Fig. 6 is a graph showing the relationship among the first-portion rate, the corrosion rate, and the deformation amount (width-elongation and height-elongation of the grid body) for the grid bodies A1 to A3 and B1. It can be seen from Fig. 6 that, although the corrosion rate does not change so much, the width-elongation and the height-elongation are remarkably reduced when the first-portion rate is 60% or more.

### <<Examples 4 to 7>>

The ratio of WLH to WLW is changed to WLH/WLW = 1.96, 1.34, 0.80, or 0.79 to prepare each of grid bodies A4 to A7, the above positive electrode plates are prepared, and batteries A4 to A7 are prepared as the test batteries Y.

### <<Comparative Examples 2 to 5>>

The ratio of WLH to WLW is changed to WLH/WLW = 1.96, 1.34, 0.80, or 0.79 to prepare each of grid bodies B2 to B5, the above positive electrode plates are prepared, and the batteries B2 to B5 are prepared as the test batteries Y.

### (B) Second single-plate overcharge test

Table 2 shows the results of the second single-plate overcharge test for the batteries A4 to A7 and the batteries B2 to B5.

**[Table 2]**

| | WLH/WLW | First-portion rate (%) | Width-elongation (mm) |
|---|---|---|---|
| A4 | 1.96 | 60 | 1.7 |
| A5 | 1.34 | 60 | 1.1 |
| A6 | 0.80 | 60 | 0.8 |
| A7 | 0.79 | 60 | 0.6 |
| B2 | 1.96 | 45.7 | 5.8 |
| B3 | 1.34 | 45.7 | 3.8 |
| B4 | 0.80 | 45.7 | 2.9 |
| B5 | 0.79 | 45.7 | 2.0 |

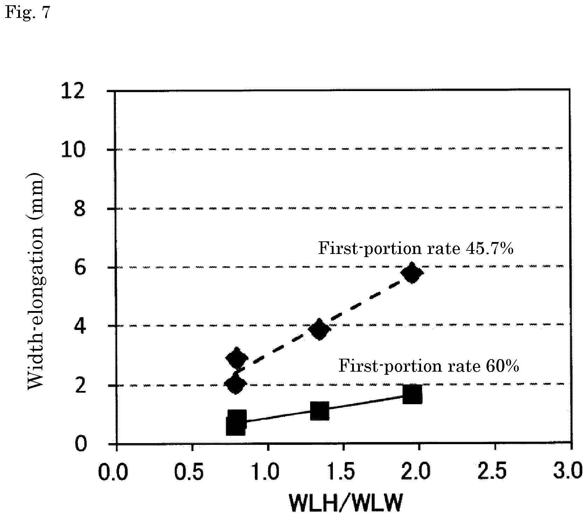

Fig. 7 shows the relationship between WLH/WLW and the width-elongation for the grid bodies A4 to A7 and B2 to B5. It can be seen from Fig. 7 that the width-elongation is reduced when the first-portion rate is 60%, and in that case, with an increase in WLH/WLW (especially when WLH/WLW is 0.8 or more), the effect of reducing the width-elongation increases.

### <<Example 8>>

The above positive electrode plate is prepared using the grid body A1 (first-portion rate 60%), and a battery A8 (12 V, rated five-hour-rate capacity of 48 Ah) is assembled as the test battery Z.

### <<Examples 9 to 14>>

By pressing the inner ribs or the like, the first-portion rate of the section C is changed to 50%, 70%, 80%, 90%, 95%, or 100% to prepare each of grid bodies A9 to A14, the above positive electrode plate is prepared, and batteries A9 to A14 (12 V, rated five-hour-rate capacity of 48 Ah) are assembled as the test battery Z described above.

### (C) Repeated 5hR charge-discharge test

Table 3 shows the results of the repeated 5hR charge-discharge test for the batteries A8 to A14.

**[Table 3]**

| | First-portion rate (%) | 5hR discharge capacity (rate to initial) (%) |
|---|---|---|
| A9 | 50 | 100 |
| A8 | 60 | 100 |
| A10 | 70 | 98 |
| A11 | 80 | 96 |
| A12 | 90 | 90 |
| A13 | 95 | 78 |
| A14 | 100 | 65 |

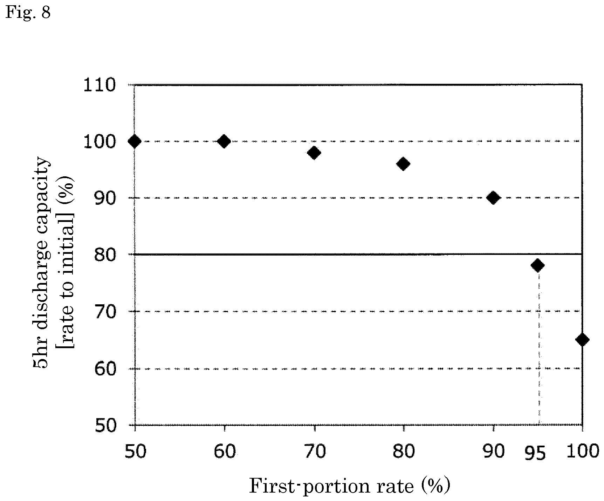

Fig. 8 is a graph showing the relationship between the first-portion rate and the five-hour rate discharge capacity (rate to initial). There is seen a tendency that when the first-portion rate exceeds 95%, the five-hour rate discharge capacity decreases. Therefore, it can be understood that a higher first-portion rate is not always better and that controlling the first portion rate to be 95% or less is preferred.

### INDUSTRIAL APPLICABILITY

The grid body for a lead-acid battery according to the present invention can be applied to a valve regulated lead-acid battery and a flooded-type lead-acid battery and can be suitably used as a power source for starting an automobile, a motorcycle, etc. or a power source for an industrial energy storage apparatus for an electric vehicle (forklift, etc.).

### DESCRIPTION OF REFERENCE SIGNS

1: lead-acid battery
2: negative electrode plate
2a: lug
3: positive electrode plate
3a: lug
4: separator
5: positive electrode shelf
6: negative electrode shelf
7: positive electrode pole
8: through-connector
9: negative electrode pole
11: electrode plate group
12: container
13: partition
14: cell chamber
15: lid
16: negative electrode terminal
17: positive electrode terminal
18: vent plug
100A, 100B: current collector
110: frame rib
111: upper element
112: lower element
113, 114: side element
120: inner rib
120A: longitudinal rib
120B: transverse rib
130: lug
132: lower protrusion (foot)
210: first portion
220: second portion

## Claims

1. A current collector (100A, 100B) for a lead-acid battery (1), comprising:
a frame rib (110);
a lug (130) provided on the frame rib (110); and
inner ribs (120) inside the frame rib (110),
wherein the frame rib (110) includes an upper element (111) continuous with the lug (130), a lower element (112) facing the upper element (111), and a pair of side elements (113, 114) coupling the upper element (111) with the lower element (112),
the inner ribs (120) include a longitudinal rib (120A) extending in a first direction from the upper element (111) toward the lower element (112), and a transverse rib (120B) extending in a second direction (MD) from one of the side elements (113, 114) toward the other of the side elements (113, 114),
a striped pattern of a metallic fibrous structure is observed in a cross-section perpendicular to the first direction of the longitudinal rib (120A),
an outer peripheral region of the cross-section having a depth of at least 55 µm or more from a line corresponding to the outer surface of the longitudinal rib (120A) is made up of a first portion (210) in which the fibrous structure extends along a contour of the cross-section and a second portion (220) except for the first portion (210), wherein the first portion (210) consists of the stripes of the fibrous structure having an angle (θ) of less than 45° with the contour of the section of the cross-section and the second portion (220) consists of the stripes of the fibrous structure having an angle (θ) of more than 45° with the contour of the section of the cross-section and/or of the stripes of the fibrous structure whose angle (θ) with the contour of the section of the cross-section is unobservable, and
a percentage of a length of the contour corresponding to the first portion (210) to a total length of the contour of the cross-section is 50% or more.

2. The current collector (100A, 100B) for a lead-acid battery (1) according to claim 1, wherein a percentage of the length of the contour corresponding to the first portion (210) to the total length of the contour of the cross-section is less than 100%.

3. The current collector (100A, 100B) for a lead-acid battery (1) according to claim 1, wherein the percentage of the length of the contour corresponding to the first portion (210) to the total length of the contour of the cross-section is 95% or less.

4. The current collector (100A, 100b) for a lead-acid battery (1) according to any one of claims 1 to 3, wherein the percentage of the length of the contour corresponding to the first portion (210) to the total length of the contour of the cross-section is 60% or more.

5. The current collector (100A, 100B) for a lead-acid battery (1) according to any one of claims 1 to 3, wherein the percentage of the length of the contour corresponding to the first portion (210) to the total length of the contour of the cross-section is 70% or more.

6. The current collector (100A, 100B) for a lead-acid battery (1) according to claim 1, wherein a percentage of the length of the contour corresponding to the first portion (210) to the total length of the contour of the cross-section is 50% or more and less than 100%.

7. The current collector (100A, 100B) for a lead-acid battery (1) according to any one of claims 1 to 6, wherein the cross-section is octagonal.

8. The current collector (100A, 100B) for a lead-acid battery (1) according to any one of claims 1 to 7, wherein
the current collector (100A, 100B) is a current collector punched out of a stretched sheet of lead or a lead alloy, and
a total length WLH of inner dimensions of the longitudinal rib (120A) and a total length WLW of the inner dimensions of the transverse rib (120B) satisfy WLH/WLW ≥ 0.8.

9. The current collector (100A, 100B) for a lead-acid battery (1) according to claim 8, wherein the total length WLH of inner dimensions of the longitudinal rib (120A) and the total length WLW of the inner dimensions of the transverse rib (120B) satisfy WLH/WLW ≥ 1.3.

10. An electrode plate (3) for a lead-acid battery (1), comprising:
the current collector (100A, 100B) for a lead-acid battery (1) according to any one of claims 1 to 9; and
a positive electrode material held by the current collector (100A, 100B) for a lead-acid battery (1),
wherein a density of the positive electrode material is 3.6 g/cm³ or more.

11. The electrode plate (3) for a lead-acid battery (1) according to claim 10, wherein the density of the positive electrode material is 4.4 g/cm³ or more.

12. The electrode plate (3) for a lead-acid battery (1) according to claim 10 or 11, wherein the density of the positive electrode material is 4.8 g/cm³ or less.

13. The electrode plate (3) for a lead-acid battery (1) according to claim 10, wherein the density of the positive electrode material is 3.6 g/cm³ or more and 4.8 g/cm³ or less.

14. The electrode plate (3) for a lead-acid battery (1) according to any one of claims 10 to 13, wherein a maximum thickness T of the positive electrode material and a thickness t of the current collector (100A, 100B) for a lead-acid battery (1) satisfy T - t ≤ 1 mm.

## Patentansprüche

1. Stromkollektor (100A, 100B) für eine Blei-Säure-Batterie (1), umfassend:
eine Rahmenrippe (110);
eine Lasche (130), an der Rahmenrippe (110) bereitgestellt ist; und
innere Rippen (120) im Inneren der Rahmenrippe (110),
wobei die Rahmenrippe (110) ein oberes Element (111), das mit der Lasche (130) integral ausgebildet ist, ein unteres Element (112), das dem oberen Element (111) zugewandt ist, und ein Paar Seitenelemente (113, 114),
die das obere Element (111) mit dem unteren Element (112) koppeln, umfasst,
die inneren Rippen (120) eine Längsrippe (120A), die sich in einer ersten Richtung von dem oberen Element (111) in Richtung des unteren Elements (112) erstreckt, und eine Querrippe (120B), die sich in einer zweiten Richtung (MD) von einem der Seitenelemente (113, 114) in Richtung des anderen der Seitenelemente (113, 114) erstreckt, umfassen,
ein gestreiftes Muster aus einer metallischen Faserstruktur in einem Querschnitt senkrecht zu der ersten Richtung der Längsrippe (120A) zu erkennen ist,
eine Außenumfangsregion des Querschnitts, die eine Tiefe von mindestens 55 µm oder mehr hat, ab einer Linie, die der Außenfläche der Längsrippe (120A) entspricht, von einem ersten Abschnitt (210), in dem sich die Faserstruktur entlang einer Kontur des Querschnitts erstreckt, und einem zweiten Abschnitt (220) mit Ausnahme des ersten Abschnitts (210) gebildet ist, wobei der erste Abschnitt (210) aus den Streifen der Faserstruktur, die einen Winkel (θ) von weniger als 45° mit der Kontur der Sektion des Querschnitts aufweisen, besteht und der zweite Abschnitt (220) aus den Streifen der Faserstruktur, die einen Winkel (θ) von mehr als 45° mit der Kontur der Sektion des Querschnitts aufweisen,
und/oder aus den Streifen der Faserstruktur, deren Winkel (θ) mit der Kontur der Sektion des Querschnitts nicht erkennbar ist, besteht, und
ein Prozentsatz einer Länge der Kontur, die dem ersten Abschnitt (210) entspricht, an einer Gesamtlänge der Kontur des Querschnitts 50 % oder mehr beträgt

2. Stromkollektor (100A, 100B) für eine Blei-Säure-Batterie (1) nach Anspruch 1, wobei ein Prozentsatz der Länge der Kontur, die dem ersten Abschnitt (210) entspricht, zur Gesamtlänge der Kontur des Querschnitts weniger als 100 % beträgt.

3. Stromkollektor (100A, 100B) für eine Blei-Säure-Batterie (1) nach Anspruch 1, wobei der Prozentsatz der Länge der Kontur, die dem ersten Abschnitt (210) entspricht, an der Gesamtlänge der Kontur des Querschnitts 95 % oder weniger beträgt.

4. Stromkollektor (100A, 100b) für eine Blei-Säure-Batterie (1) nach einem der Ansprüche 1 bis 3, wobei der Prozentsatz der Länge der Kontur, die dem ersten Abschnitt (210) entspricht, an der Gesamtlänge der Kontur des Querschnitts 60 % oder mehr beträgt.

5. Stromkollektor (100A, 100B) für eine Blei-Säure-Batterie (1) nach einem der Ansprüche 1 bis 3, wobei der Prozentsatz der Länge der Kontur, die dem ersten Abschnitt (210) entspricht, an der Gesamtlänge der Kontur des Querschnitts 70% oder mehr beträgt.

6. Stromkollektor (100A, 100B) für eine Blei-Säure-Batterie (1) nach Anspruch 1, wobei ein Prozentsatz der Länge der Kontur, die dem ersten Abschnitt (210) entspricht, zur Gesamtlänge der Kontur des Querschnitts 50 % oder mehr und weniger als 100 % beträgt.

7. Stromkollektor (100A, 100B) für eine Blei-Säure-Batterie (1) nach einem der Ansprüche 1 bis 6, wobei der Querschnitt achteckig ist.

8. Stromkollektor (100A, 100B) für eine Blei-Säure-Batterie (1) nach einem der Ansprüche 1 bis 7, wobei
der Stromkollektor (100A, 100B) ein Stromkollektor ist, der aus einem gereckten Bleiblech oder einer Bleilegierung gestanzt ist,
eine Gesamtlänge WLH von Innenabmessungen der Längsrippe (120A) und eine Gesamtlänge WLW der Innenabmessungen der Querrippe (120B) WLH/WLW ≥ 0,8 erfüllen.

9. Stromkollektor (100A, 100B) für eine Blei-Säure-Batterie (1) nach Anspruch 8, wobei die Gesamtlänge WLH der Innenabmessungen der Längsrippe (120A) und die Gesamtlänge WLW der Innenabmessungen der Querrippe (120B) WLH/WLW ≥ 1,3 erfüllen.

10. Elektrodenplatte (3) für eine Blei-Säure-Batterie (1), umfassend:
den Stromkollektor (100A, 100B) für eine Blei-Säure-Batterie (1) nach einem der Ansprüche 1 bis 9; und
ein positives Elektrodenmaterial, das durch den Stromkollektor (100A, 100B) für eine Blei-Säure-Batterie (1) gehalten wird,
wobei eine Dichte des positiven Elektrodenmaterials 3,6 g/cm³ oder mehr beträgt.

11. Elektrodenplatte (3) für eine Blei-Säure-Batterie (1) nach Anspruch 10, wobei die Dichte des positiven Elektrodenmaterials 4,4 g/cm³ oder mehr beträgt.

12. Elektrodenplatte (3) für eine Blei-Säure-Batterie (1) nach Anspruch 10 oder 11, wobei die Dichte des positiven Elektrodenmaterials 4,8 g/cm³ oder weniger beträgt.

13. Elektrodenplatte (3) für eine Blei-Säure-Batterie (1) nach Anspruch 10, wobei die Dichte des positiven Elektrodenmaterials 3,6 g/cm³ oder mehr und 4,8 g/cm³ oder weniger beträgt.

14. Elektrodenplatte (3) für eine Blei-Säure-Batterie (1) nach einem der Ansprüche 10 bis 13, wobei eine maximale Dicke T des positiven Elektrodenmaterials und eine Dicke t des Stromkollektors (100A, 100B) für eine Blei-Säure-Batterie (1) T - 1≤ 1 mm erfüllen.

## Revendications

1. Collecteur de courant (100A, 100B) pour batterie au plomb-acide (1), comprenant :
une nervure de cadre (110) ;
une patte (130) prévue sur la nervure de cadre (110) ; et
des nervures internes (120) à l'intérieur de la nervure de cadre (110),
dans lequel la nervure de cadre (110) inclut un élément supérieur (111) continu avec la patte (130), un élément inférieur (112) faisant face à l'élément supérieur (111), et une paire d'éléments latéraux (113, 114) reliant l'élément supérieur (111) à l'élément inférieur (112),
les nervures internes (120) incluent une nervure longitudinale (120A) s'étendant dans une première direction de l'élément supérieur (111) vers l'élément inférieur (112), et une nervure transversale (120B) s'étendant dans une seconde direction (MD) depuis l'un des éléments latéraux (113, 114) vers l'autre des éléments latéraux (113, 114),
un motif rayé d'une structure fibreuse métallique est observé dans une section transversale perpendiculaire à la première direction de la nervure longitudinale (120A), une région périphérique externe de la section transversale ayant une profondeur d'au moins 55 µm ou plus par rapport à une ligne correspondant à la surface externe de la nervure longitudinale (120A) est constituée d'une première partie (210) dans laquelle la structure fibreuse s'étend le long d'un contour de la section transversale et d'une seconde partie (220) à l'exception de la première partie (210), dans lequel la première partie (210) est constituée des rayures de la structure fibreuse ayant un angle (θ) inférieur à 45° avec le contour de la section de la section transversale et la seconde partie (220) est constituée des rayures de la structure fibreuse ayant un angle (θ) supérieur à 45° avec le contour de la section de la section transversale et/ou des bandes de la structure fibreuse dont l'angle (θ) avec le contour de la section de la section transversale n'est pas observable, et
un pourcentage d'une longueur du contour correspondant à la première partie (210) par rapport à une longueur totale du contour de la section transversale est de 50 % ou plus.

2. Collecteur de courant (100A, 100B) pour batterie au plomb-acide (1) selon la revendication 1, dans lequel un pourcentage de la longueur du contour correspondant à la première partie (210) par rapport à la longueur totale du contour de la section transversale est inférieur à 100 %.

3. Collecteur de courant (100A, 100B) pour batterie au plomb-acide (1) selon la revendication 1, dans lequel le pourcentage de la longueur du contour correspondant à la première partie (210) par rapport à la longueur totale du contour de la section transversale est de 95 % ou moins.

4. Collecteur de courant (100A, 100 b) pour batterie au plomb-acide (1) selon l'une quelconque des revendications 1 à 3, dans lequel le pourcentage de la longueur du contour correspondant à la première partie (210) par rapport à la longueur totale du contour de la section transversale est de 60 % ou plus.

5. Collecteur de courant (100A, 100B) pour batterie au plomb-acide (1) selon l'une quelconque des revendications 1 à 3, dans lequel le pourcentage de la longueur du contour correspondant à la première partie (210) par rapport à la longueur totale du contour de la section transversale est de 70 % ou plus.

6. Collecteur de courant (100A, 100B) pour batterie au plomb-acide (1) selon la revendication 1, dans lequel un pourcentage de la longueur du contour correspondant à la première partie (210) par rapport à la longueur totale du contour de la section transversale est de 50 % ou plus et inférieur à 100 %.

7. Collecteur de courant (100A, 100B) pour batterie au plomb-acide (1) selon l'une quelconque des revendications 1 à 6, dans lequel la section transversale est octogonale.

8. Collecteur de courant (100A, 100B) pour batterie au plomb-acide (1) selon l'une quelconque des revendications 1 à 7, dans lequel
le collecteur de courant (100A, 100B) est un collecteur de courant découpé dans une feuille étirée de plomb ou d'un alliage de plomb, et
une longueur totale WLH de dimensions internes de la nervure longitudinale (120A) et une longueur totale WLW des dimensions internes de la nervure transversale (120B) satisfont à WLH/WLW ≥ 0,8.

9. Collecteur de courant (100A, 100B) pour batterie au plomb-acide (1) selon la revendication 8, dans lequel la longueur totale WLH de dimensions internes de la nervure longitudinale (120A) et la longueur totale WLW des dimensions internes de la nervure transversale (120B) satisfont à WLH/WLW ≥ 1,3.

10. Plaque d'électrode (3) pour une batterie au plomb-acide (1), comprenant :
le collecteur de courant (100A, 100B) pour une batterie au plomb-acide (1) selon l'une quelconque des revendications 1 à 9 ; et
un matériau d'électrode positive contenu par le collecteur de courant (100A, 100B) pour une batterie au plomb-acide (1),
dans laquelle la densité du matériau d'électrode positive est de 3,6 g/cm³ ou plus.

11. Plaque d'électrode (3) pour batterie au plomb-acide (1) selon la revendication 10, dans laquelle la densité du matériau d'électrode positive est de 4,4 g/cm³ ou plus.

12. Plaque d'électrode (3) pour batterie au plomb-acide (1) selon la revendication 10 ou 11, dans laquelle la densité du matériau d'électrode positive est de 4,8 g/cm³ ou moins.

13. Plaque d'électrode (3) pour batterie au plomb-acide (1) selon la revendication 10, dans laquelle la densité du matériau d'électrode positive est de 3,6 g/cm³ ou plus et de 4,8 g/cm³ ou moins.

14. Plaque d'électrode (3) pour batterie au plomb-acide (1) selon l'une quelconque des revendications 10 à 13, dans laquelle une épaisseur maximale T du matériau d'électrode positive et une épaisseur t du collecteur de courant (100A, 100B) pour batterie au plomb-acide (1) satisfont à T - t ≤ 1 mm.
